# EUROPEAN PATENT APPLICATION

(11) **EP 4 817 400 A1**
(43) Date of publication of application: **07.10.2026**
(21) Application number: 26161158.6
(22) Date of filing: 27.02.2026
(51) Int. Cl.: A01F 15/07, B65B 13/32

(54) **ROUND BALER WITH BALE FILM WELDING**

(30) Priority: 04.04.2025 US 202519170150
(71) Applicant: Deere & Company, Moline, IL 61265 (US)
(72) Inventor: Derscheid, Daniel E., 68163 Mannheim (DE); Erdmann, Jeremy M., 68163 Mannheim (DE); Anstey, Henry D., 68163 Mannheim (DE); Moreno Rodríguez, Carolina, 68163 Mannheim (DE)
(74) Representative: Stein, Stefan

(57) **Abstract**

A baler implement (24) with a baling chamber (54) having an inlet (52) operable to introduce the crop material into the baling chamber (54). A wrap system (62) is configured to contain a supply of a wrap material (66), and includes a feed system (64) configured for inserting the wrap material (66) into the baling chamber (54) to wrap a bale (98) with the wrap material (66). A heating element (68) is moveable through the inlet (52) of a bale formation system (46), into the baling chamber (54). The heating element (68) is moveable between an inserted position in which the heating element (68) is disposed within the baling chamber (54) for contacting the wrap material (66) in pressing engagement within the baling chamber (54) for welding layers of the wrap material (66) together, and a retracted position in which the heating element (68) is disposed outside of the baling chamber (54) and out of the inlet (52) for allowing crop material to flow through the inlet (52) into the baling chamber (54).

## Description

### TECHNICAL FIELD

The disclosure generally relates to a baler implement having a heating element for welding layers of a wrap material together.

### BACKGROUND

There are a wide variety of different types of machines that generate bales of material. Such balers can bale material like hay, straw, silage, cotton, recycled paper products, etc. One type of baler implement is often referred to as a round baler. A round baler gathers crop material and rotates the material within a baling chamber, whereby the crop material is formed into a bale having a cylindrical shape. Once the bale is fully formed, a wrap system introduces a wrap material into the baling chamber, whereby the rotating bale grasps the wrap material about an exterior circumferential surface of the bale, and encircling the bale with the wrap material within the baling chamber as the bale rotates to bind the bale and hold the shape of the bale. Once the wrap material is secured, the bale may be ejected from the round baler implement.

In some implementations, the wrap material includes a solid sheet material manufactured from a plastic or polymer. An outer layer and/or tail end of the wrap material may be secured or bound to an underlying layer of the wrap material, such as via adhesion, chemical bond, etc., to secure the wrap material around the bale. However, the inclusion of an adhesive on the wrap material, or a wrap material that exhibits "clingy" characteristics, are difficult to feed into the baling chamber without getting stuck to various components of the wrap system and/or baler.

### SUMMARY

A baler implement is provided. The baler implement includes a support structure, and a bale formation system. The bale formation system defines a baling chamber configured to form crop material into a bale having a cylindrical shape. A wrap system is configured to contain a supply of a wrap material, and includes a feed system configured for inserting the wrap material into the baling chamber to wrap the bale with the wrap material. The baler implement includes heating element that is moveable relative to the support structure into and out of the baling chamber. The heating element is moveable between an inserted position in which the heating element is disposed within the baling chamber for contacting the wrap material in pressing engagement within the baling chamber for welding layers of the wrap material together, and a retracted position in which the heating element is disposed outside of the baling chamber and out of the inlet for allowing crop material to flow through the inlet into the baling chamber.

In one aspect of the disclosure, the bale formation system includes an inlet operable to introduce the crop material into the baling chamber. The heating element may be configured to move through the inlet of the bale formation system, into the baling chamber. However, it should be appreciated that the heating element may be configured to move into and out of the baling chamber at a location other than the inlet. For example, if the bale formation system includes a plurality of forming belts defining the baling chamber, the heating element may be configured to move into and out of the baling chamber at some other location of the baling chamber, other than the inlet, which is not blocked by the forming belts.

In one aspect of the disclosure, the baler implement may include a mount system. The mount system may moveably support the heating element relative to the support structure for moving the heating element between the inserted position and the retracted position.

In one implementation of the disclosure, the mount system may include a stationary member and a moveable member. The stationary member may be fixed in position relative to the support structure. The moveable member may be moveably supported by the stationary member for movement relative to the stationary member.

In one implementation of the disclosure, the heating element may be attached to the moveable member of the mount system.

In one implementation of the disclosure, the moveable member may include a weld bar extending substantially across a width of the baling chamber. The heating element may be attached to the weld bar and also extend substantially across the width of the baling chamber.

In one aspect of the disclosure, the stationary member may define a guide feature, and the moveable member may include a guide follower. The guide follower of the moveable member may be engaged with the guide feature, whereby the guide feature positions and guides the guide follower through movement of the heating element between the inserted position and the retracted position.

In one implementation of the disclosure, the guide feature includes, but is not limited to, a slot defined by the stationary member. The guide follower may include, but is not limited to, a roller device disposed in rolling engagement within the slot. In another implementation, the guide follower may include a slide device disposed in sliding engagement within the slot. Engagement between the guide follower and the guide feature positions the moveable member relative to the support structure through its movement between the retracted position and the inserted position.

In one aspect of the disclosure, the mount system may include a weld actuator. The weld actuator may be coupled to the moveable member for moving the moveable member and the heating element attached thereto between the inserted position and the retracted position. The weld actuator may include, but is not limited to, one of a hydraulic cylinder or an electric actuator.

In one aspect of the disclosure, the wrap material defines a wrap melting temperature. The heating element is configured for heating the wrap material to the wrap melting temperature for welding layers of the wrap material together.

In one aspect of the disclosure, the heating element includes one of, but is not limited to, an electrical resistance heater, a hot air heater, an infrared heater, a laser heater, or a hot fluid heater circulating a heated fluid through a heat transfer element.

In one aspect of the disclosure, the baler implement may include a baler controller. The baler controller may include a processor and a memory having a wrap weld algorithm stored thereon. The processor is operable to execute the wrap weld algorithm to identify completion of a wrap cycle in which the wrap material is wrapped around a circumference of the bale within the baling chamber. The baler controller may then control the weld actuator to move the heating element from the retracted position into the inserted position, and engage the heating element to increase a temperature of the heating element to at least a wrap melting temperature for a period of time, whereby layers of the wrap material may be welded together. After the period of time has elapsed, the baler controller may then disengage the heating element, and control the weld actuator to move the heating element from the inserted position into the retracted position.

In one aspect of the disclosure, the processor may be operable to execute the wrap weld algorithm to control the weld actuator to achieve a desired pressure of the heating element against the wrap material. The desired pressure of the heating element may be dependent upon the period of time.

Accordingly, the baler implement described herein includes a heating element configured to move into and out of the baling chamber for welding layers of the wrap material together. Many round balers include forming belts circling in an endless loop which define the baling chamber. By configuring the heating element to move into and out of the baling chamber through the inlet of the bale formation system, the heating element may be easily introduced into the baling chamber without interference by the forming belts, and then withdraw out of the baling chamber and out of the inlet to allow the crop material to pass through the inlet.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic side view of a baling system.
FIG. 2 is a schematic side view of a baler implement of the baling system, showing a first implementation of a bale wrap weld system in a retracted position.
FIG. 3 is a schematic side view of the baler implement showing the first implementation of the bale wrap weld system in an inserted position.
FIG. 4 is a schematic perspective view of the first implementation of the bale wrap weld system.
FIG. 5 is a schematic side view of the baler implement showing a second implementation of the bale wrap weld system in the retracted position.
FIG. 6 is a schematic side view of the baler implement showing the second implementation of the bale wrap weld system in the inserted position.
FIG. 7 is a schematic perspective view of the second implementation of the bale wrap weld system.
FIG. 8 is a schematic end view of the second implementation of the bale wrap weld system.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

The terms "forward", "rearward", "left", and "right", when used in connection with a moveable implement and/or components thereof are usually determined with reference to the direction of travel during operation, but should not be construed as limiting. The terms "longitudinal" and "transverse" are usually determined with reference to the fore-and-aft direction of the implement relative to the direction of travel during operation, and should also not be construed as limiting.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

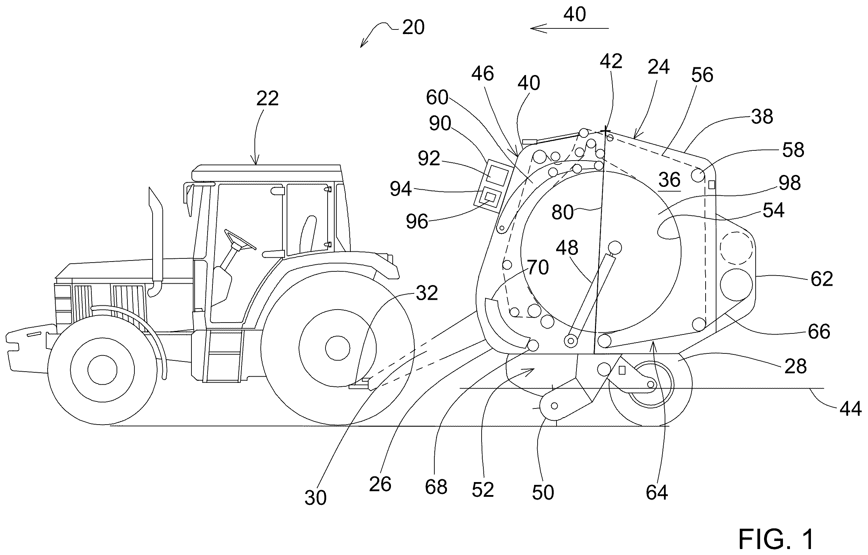

Referring to the Figures, wherein like numerals indicate like parts throughout the several views, a baling system is generally shown at 20 in FIG. 1. The baling system 20 includes a tow vehicle 22 and a baler implement 24.

Referring to FIG. 1, the tow vehicle 22 is coupled to the baler implement 24, and is configured for moving the baler implement 24 across a ground surface. The tow vehicle 22 may include for example, but is not limited to, an agricultural tractor or other similar moveable platform. The tow vehicle 22 includes a drive system operable to generate a motive force for rotating drive elements, e.g., drive wheels and/or drive tracks, for propelling the tow vehicle 22 across the ground surface. The drive system may include, but is not limited to, a prime mover coupled to a drive train. The prime mover may include, but is not limited to, an internal combustion engine, an electric motor, or a combination of both. The drive train may include a transmission, drive shafts, axles, differential drives, etc. The components and operation of the drive system are understood by those skilled in the art, and are therefore not described in greater detail herein.

Referring to FIG. 1, the example implementation of the baler implement 24 includes a support structure 26. The support structure 26 may include, but is not limited to, a frame and other structural components connected together to provide structural support to other components and panels of the baler implement 24. One or more ground engaging elements 28, such as but not limited to one or more wheels and/or tracks, are attached to and rotatably supported by the support structure 26. The ground engaging elements 28 moveably support the support structure 26 relative to the ground surface. A tongue 30 may be coupled to the support structure 26 at a forward end of the of the support structure 26. A hitch arrangement 32 may be included with the tongue 30. The hitch arrangement 32 may be used to attach the baler implement 24 to the tow vehicle 22. In other embodiments, the baler implement 24 may be self-propelled, in which case the tow vehicle 22 and the baler implement 24 are combined as a single, self-propelled vehicle.

The baler implement 24 includes a housing 34. The housing 34 is attached to and supported by the support structure 26. The housing 34 may include one or more walls or panels that at least partially enclose and/or define an interior region 36. The baler implement 24 further includes a gate 38. The gate 38 may include one or more walls or panels that at least partially enclose and/or define the interior region 36. As such, the housing 34 and the gate 38 cooperate to define the interior region 36 therebetween.

The gate 38 is attached to and rotatably supported by the housing 34. The gate 38 is positioned adjacent a rearward end of the support structure 26 relative to a direction of travel 40 of the baler implement 24 while gathering crop material, and is pivotably moveable about a gate rotation axis 42. The gate rotation axis 42 is generally horizontal and perpendicular to a central longitudinal axis 44 of the baler implement 24. The central longitudinal axis 44 of the baler implement 24 extends between the forward end and the rearward end of the baler implement 24. The gate 38 is moveable between a closed position (shown in FIG. 1) for forming a bale 98 within a bale formation system 46 disposed within the interior region 36, and an open position (not shown) for discharging the bale 98 from the interior region 36 onto the ground surface.

A gate actuator 48 interconnects the gate 38 and one of the housing 34 and/or the support structure 26. The gate actuator 48 is selectively controllable via an actuator control signal to move the gate 38 between the open position and the closed position. The gate actuator 48 may include, but is not limited to, a hydraulic cylinder or other similar device capable of causing the gate 38 to rotate about the gate rotation axis 42 relative to the housing 34.

The baler implement 24 includes a pick-up 50 disposed proximate the forward end of the support structure 26. The pick-up 50 gathers crop material from the ground surface and directs the gathered crop material toward and into an inlet 52 of the interior region 36. The inlet 52 is configured to introduce the crop material into a baling chamber 54 of the bale formation system 46. The pickup may include, but is not limited to tines, forks, augers, conveyors, baffles, etc., for gathering and moving the crop material.

The bale formation system 46 is disposed within the interior region 36, between the housing 34 and the gate 38, and defines the baling chamber 54, within which the bale 98 is formed. The bale formation system 46 is operable to form the bale 98 to have a cylindrical shape. As such, the baler implement 24 may be referred to as a round baler. The bale formation system 46 may be configured as a fixed chamber system or a variable chamber system. As understood by those skilled in the art, although not shown in the Figures, a fixed chamber system includes a plurality of rollers attached to and supported by the support structure 26, the housing 34, and/or the gate 38. The plurality of rollers extend transverse to the direction of travel 40 during operation, and their respective centerlines are arranged in a circular orientation to define a cylindrical baling chamber 54 therebetween. The plurality of rollers are fixed in position relative to the support structure 26 during formation of the bale 98 within the baling chamber 54, thereby defining the baling chamber 54 having a fixed size.

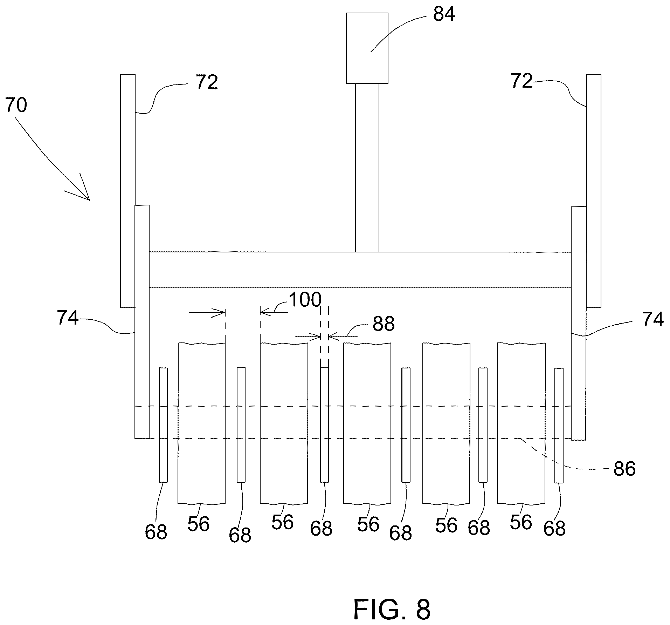

Referring to the Figures, and as is understood by those skilled in the art, the example implementation of the baler implement 24 is shown configured having a variable chamber system. The variable chamber system includes at least one, and may include a plurality of longitudinally extending side-by-side forming belts 56 that are supported by a plurality of rollers 58. The plurality of forming belts 56 are arranged in parallel, and may be separated from each other to define a belt gap distance 100 therebetween, shown in FIG. 8. In other words, adjacent pairs of the side-by-side forming belts 56 are separated from each other by the belt gap distance 100. The belt gap distance 100 may be measured along a transverse axis extending across a width of the baling chamber 54.

Referring to FIG. 1, the forming belts 56 define the baling chamber 54 and move in an endless loop to form crop material into the bale 98 having the cylindrical shape. The bale 98 is formed by the forming belts 56 and one or more side walls of the housing 34 and gate 38. As is understood by those skilled in the art, a group of the plurality of rollers 58 is moveable relative to the support structure 26, the housing 34, and/or the gate 38 during formation of the bale 98 to control the position of the forming belts 56 defining the baling chamber 54 to vary the diametric size of the baling chamber 54 as the diametric size of the bale 98 increases. In this manner, the forming belts 56 may maintain a constant pressure against the bale 98 during formation thereof as the diametric size of the bale 98 increases.

In the example implementation shown in the figures and described herein, in which the bale formation system 46 includes the variable chamber baler, the crop material is directed through the inlet 52 and into the baling chamber 54, whereby the forming belts 56 roll the crop material in a spiral fashion into the bale 98 having the cylindrical shape. The forming belts 56 apply a constant pressure to the crop material as the crop material is formed into the bale 98. A belt tensioner 60 continuously moves one or more of the rollers 58, and thereby the forming belts 56, radially outward relative to the centerline of the cylindrical bale 98 as a diameter of the bale 98 increases. The belt tensioner 60 maintains the appropriate tension in the belts to obtain the desired density of the crop material.

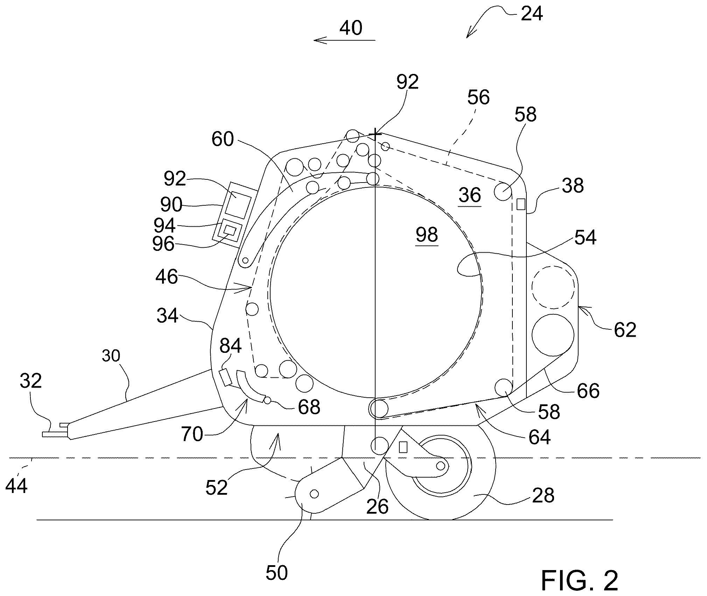

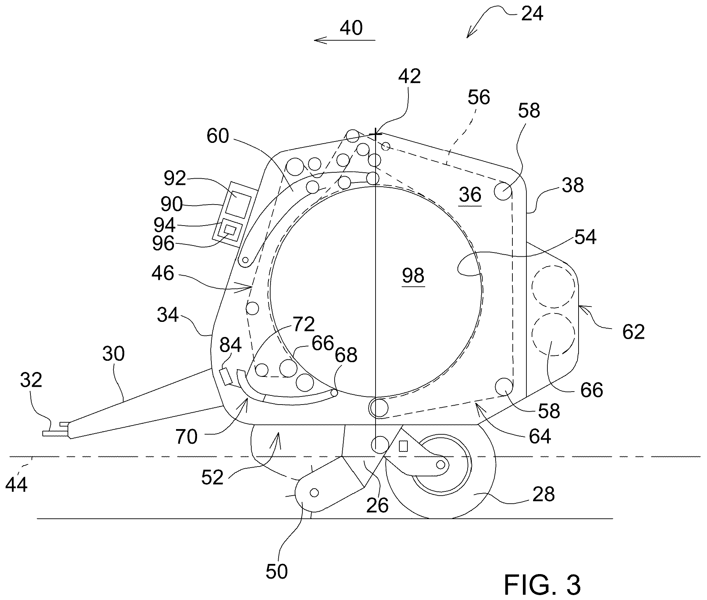

As shown in FIGS. 2 and 3, the baler implement 24 may include a wrap system 62. The wrap system 62 is configured to contain a supply of a wrap material 66. The wrap system 62 includes a feed system 64 configured for inserting the wrap material 66 into the baling chamber 54 to wrap the bale 98 with the wrap material 66. Features and components of the feed system 64 are understood by those skilled in the art, and are therefore not described in greater detail herein. The wrap system 62 is operable to wrap the bale 98 with the wrap material 66 inside the baling chamber 54. Once the bale 98 is formed to a desired size, the feed system 64 feeds the wrap material 66 into the baling chamber 54 to wrap the bale 98 and thereby secure the crop material in a tight package and maintain the desired shape of the bale 98. The wrap material 66 may include, but is not limited to, a twine, a net mesh, or a solid plastic wrap. Movement of the gate 38 into the open position simultaneously moves the belts clear of the formed bale 98 and allows the formed and wrapped bale 98 to be discharged through the rearward end of the baling chamber 54.

Some wrap materials, e.g., net materials, naturally weave and/or interlock with the crop material, thereby securing the layers of the wrap material around the circumference of the bale 98. However, some other wrap materials, e.g., solid plastic or polymer materials, may require a tail end of the wrap material 66 be secured or attached to an underlying layer to secure the layers of the wrap material 66 around the circumference of the bale 98. In the example implementation of the baler implement 24 described herein, a heating element 68 is provided to weld layers of the wrap material 66 together.

The wrap material 66 defines a wrap melting temperature. The wrap melting temperature is dependent upon the particularly physical properties of the wrap material 66. The heating element 68 is configured for heating the wrap material 66 to the wrap melting temperature for welding layers of the wrap material 66 together. The heating element 68 may include one of, but is not limited to, an electrical resistance heater that generates heat in response to an electrical current and applies the heat via contact, a hot air heater that heats air and applies heated air onto the wrap material 66, an infrared heater that generates heat in the infrared light spectrum and directs the heat onto the wrap material 66, a laser heater that generates a laser beam and applies the laser beam to the wrap material 66, or a hot fluid heater that circulates a heated fluid through a heat transfer element, such as a hollow tube or the like.

The heating element 68 may be moveable relative to the support structure 26 between a retracted position, shown in FIG. 2, and an inserted position, shown in FIG. 3. In one implementation, when the heating element 68 is disposed in the inserted position, the heating element 68 is disposed in the baling chamber 54 for contacting the wrap material 66 in pressing engagement within the baling chamber 54 for welding layers of the wrap material 66 together. When the heating element 68 is disposed in the retracted position, the heating element 68 is disposed outside of the baling chamber 54.

Referring to FIGS. 2-4, in one implementation of the disclosure, the heating element 68 is moveable into and out of the baling chamber 54 through the inlet 52 of the bale formation system 46. As such, the heating element 68 may be positioned outside of the baling chamber 54 when disposed in the retracted position, and extend through the inlet 52 and into the baling chamber 54 when disposed in the inserted position. The inlet 52 provides an access into the baling chamber 54, and is not bounded by the forming belts 56. As such, the heating element 68 may freely move through the inlet 52 without interference from the forming belts 56, allowing the heating element 68 to move into contacting engagement with the wrap material 66 for welding the wrap material 66 together. Positioning the heating element 68 out of the inlet 52 when in the retracted position allows crop material to flow through the inlet 52 into the baling chamber 54 during the bale formation process. In other implementations, it should be appreciated that the forming belts 56 may be arranged in a manner the provides access into the baling chamber at a location other than the inlet 52. As such, it should be appreciated that the heating element 68 may move into and out of the baling chamber at a location other than the inlet 52, providing such other location is not otherwise blocked or covered by the forming belts 56.

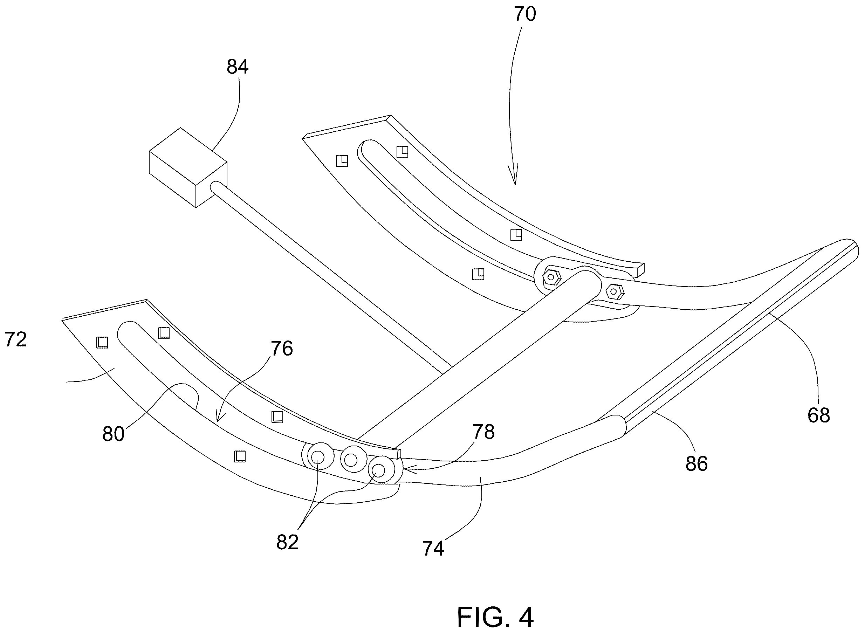

The baler implement 24 may include a mount system 70 that moveably supports the heating element 68 relative to the support structure 26. The mount system 70 is configured for moving the heating element 68 between the retracted position and the inserted position. As best shown in FIG. 4, in one example implementation, the mount system 70 may include a stationary member 72 and a moveable member 74. The stationary member 72 is fixed in position relative to the support structure 26. For example, the stationary member 72 may include brackets, mounts, etc., that are attached to the support structure 26. The moveable member 74 is moveably supported by the stationary member 72 for movement relative to the stationary member 72. The moveable member 74 may include bars, mounts, plates, brackets, etc. for supporting the heating element 68 and coupling the moveable member 74 to the stationary member 72.

Referring to FIG. 4, the stationary member 72 may define a guide feature 76 and the moveable member 74 may include a guide follower 78. The guide follower 78 is engaged with the guide feature 76. The guide feature 76 positions and guides the guide follower 78 along a defined path for movement between the inserted position and the retracted position. In one implementation, the guide feature 76 may include a slot 80 defined by the stationary member 72, and the guide follower 78 may include a roller device 82 disposed in rolling engagement within the slot 80. The roller device 82 moves within the slot 80. The slot 80 secures the roller device 82 and guides the roller device 82 along the defined path for moving the heating element 68 between the inserted position and the retracted position. In the example implementation shown in the Figures and described herein, the defined path may include an arcuate path, when viewed from a side of the baler implement 24, which allows the heating element 68 to move through the inlet 52 without blocking the inlet 52 when in the retracted position.

The mount system 70 may further include a weld actuator 84 that is coupled to the moveable member 74. The weld actuator 84 is configured for moving the moveable member 74 and the heating element 68 attached thereto between the inserted position and the retracted position. In one implementation, the weld actuator 84 may include one of, but is not limited to, a hydraulic cylinder, a hydraulic motor, a pneumatic actuator, or an electric actuator. The electric actuator may include a linear actuator or a rotary actuator. The weld actuator 84 may be controlled via a signal to generate movement, for example, linear movement, which in turn moves the moveable member 74 relative to the stationary member 72 along the defined path. The weld actuator 84 may further be controlled so that the heating element 68 exerts a desired amount of pressure against the wrap material 66. It should be appreciated that heat transfer may occur more quickly at higher pressures. However, the pressure exerted against the wrap material 66 must not be so great as to melt through the outer layer of the wrap material 66 and thereby fail to weld the outer layer of the wrap material 66 to the underlying layers of the wrap material 66.

As noted above, the heating element 68 may be attached to the moveable member 74. In one implementation, the moveable member 74 includes a weld bar 86 extending substantially across a width of the baling chamber 54. As used herein, the phrase "extending substantially across the width of the baling chamber 54" may include extending at least seventy five percent 75% across the width of the baling chamber 54. The heating element 68 may be attached to the weld bar 86 and also substantially extend across the width of the baling chamber 54. It should be appreciated that the heating element 68 may alternatively include multiple independent elements arranged end-to-end to extend across the width of the baling chamber 54.

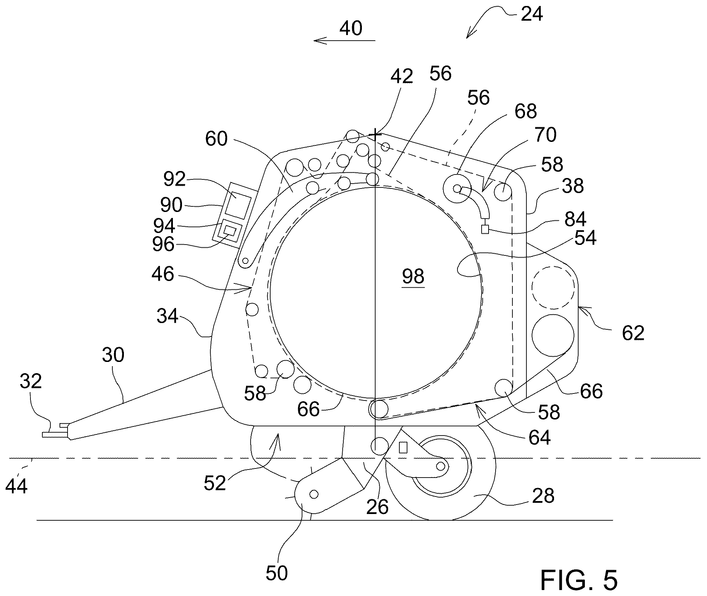

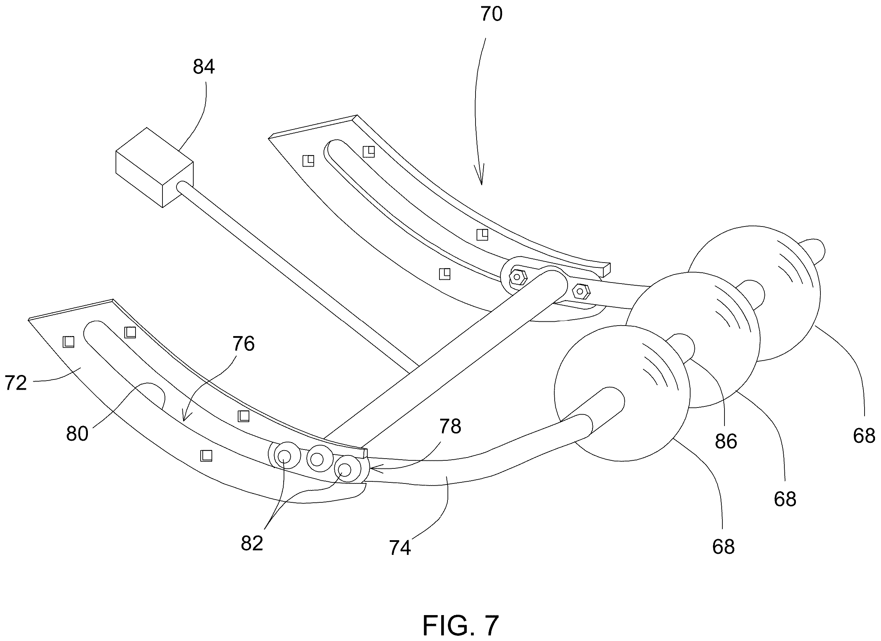

Referring to FIGS. 5-8, in another implementation, the heating element 68 may be moveable relative to the support structure 26 through the belt gap distance 100 between an adjacent pair of the plurality of side-by-side forming belts 56. As described above, each adjacent pair of the side-by-side forming belts 56 may be separated by the belt gap distance 100. The heating element 68 be configured as a disc, plate, bar, etc., and may include a thickness 88 measured along the transverse axis that is less than the belt gap distance 100, thereby allowing the heating element 68 to pass between the adjacent pair of side-by-side forming belts 56. In one implementation, each respective pair of the side-by-side forming belts 56 is associated with a respective heating element 68, such that each belt gap is configured to receive a respective heating element 68 therethrough.

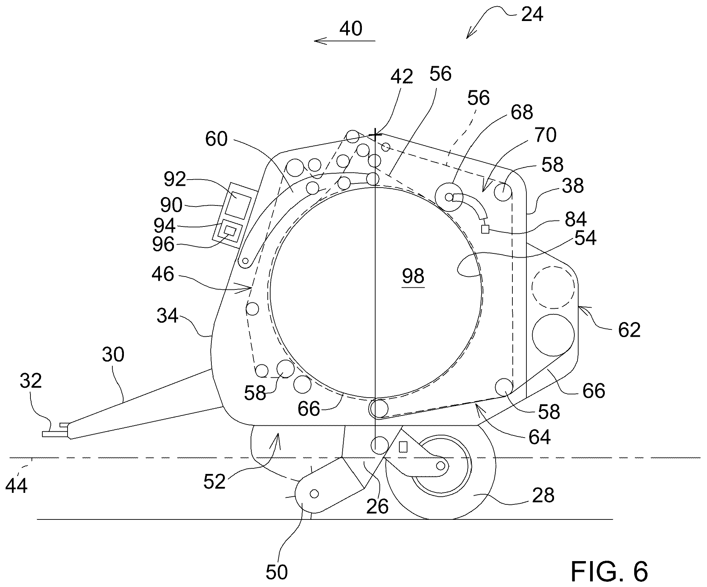

The heating element 68 is moveable through the belt gap distance 100 between the retracted position, shown in FIG. 5, in which the heating element 68 is disposed outside of the baling chamber 54, and the inserted position, shown in FIG. 6, in which the heating element 68 is disposed within the baling chamber 54 for contacting the wrap material 66 in pressing engagement within the baling chamber 54 for welding layers of the wrap material 66 together. In this implementation, the heating element 68 may be positioned within the interior region 36 of the baler in an area not proximate the inlet 52.

Referring to FIG. 1, the baler implement 24 may further include a baler controller 90. The baler controller 90 may be disposed in communication with the weld actuator 84 and/or the heating element 68. The baler controller 90 is operable to control operation of the weld actuator 84 and/or the heating element 68. While the baler controller 90 is generally described herein as a singular device, it should be appreciated that the baler controller 90 may include multiple devices linked together to share and/or communicate information therebetween. Furthermore, it should be appreciated that the baler controller 90 may be located on the baler implement 24 or located remotely from the baler implement 24.

The baler controller 90 may alternatively be referred to as a computing device, a computer, a controller, a control unit, a control module, a module, etc. The baler controller 90 includes a processor 92, a memory 94, and all software, hardware, algorithms, connections, sensors, etc., necessary to manage and control the operation of the baler implement 24 described herein. As such, a method may be embodied as a program or algorithm operable on the baler controller 90. It should be appreciated that the baler controller 90 may include any device capable of analyzing data from various sensors, comparing data, making decisions, and executing the required tasks.

As used herein, "baler controller 90" is intended to be used consistent with how the term is used by a person of skill in the art, and refers to a computing component with processing, memory, and communication capabilities, which is utilized to execute instructions (i.e., stored on the memory 94 or received via the communication capabilities) to control or communicate with one or more other components. In certain embodiments, the baler controller 90 may be configured to receive input signals in various formats (e.g., hydraulic signals, voltage signals, current signals, CAN messages, optical signals, radio signals), and to output command or communication signals in various formats (e.g., hydraulic signals, voltage signals, current signals, CAN messages, optical signals, radio signals).

The baler controller 90 may be in communication with other components on the baler implement 24, such as hydraulic components, electrical components, and operator inputs within an operator station of an associated work vehicle. The baler controller 90 may be electrically connected to these other components wirelessly or via a wiring harness such that messages, commands, and electrical power may be transmitted between the baler controller 90 and the other components. Although the baler controller 90 is referenced in the singular, in alternative embodiments the configuration and functionality described herein can be split across multiple devices using techniques known to a person of ordinary skill in the art.

The baler controller 90 may be embodied as one or multiple digital computers or host machines each having one or more processors, read only memory (ROM), random access memory (RAM), electrically-programmable read only memory (EPROM), optical drives, magnetic drives, etc., a high-speed clock, analog-to-digital (A/D) circuitry, digital-to-analog (D/A) circuitry, and any required input/output (I/O) circuitry, I/O devices, and communication interfaces, as well as signal conditioning and buffer electronics.

The computer-readable memory 94 may include any non-transitory/tangible medium which participates in providing data or computer-readable instructions. The memory 94 may be non-volatile or volatile. Non-volatile media may include, for example, optical or magnetic disks and other persistent memory. Example volatile media may include dynamic random access memory (DRAM), which may constitute a main memory. Other examples of embodiments for the memory 94 include a floppy, flexible disk, or hard disk, magnetic tape or other magnetic medium, a CD-ROM, DVD, and/or any other optical medium, as well as other possible memory devices such as flash memory.

The baler controller 90 includes the tangible, non-transitory memory 94 on which are recorded computer-executable instructions, including a wrap weld algorithm 96. The processor 92 of the baler controller 90 is configured for executing the wrap weld algorithm 96. The wrap weld algorithm 96 implements a method of welding layers of the wrap material 66 together, described in detail below.

The process may begin with the baler controller 90 identifying completion of a wrap cycle in which the wrap material 66 is wrapped around a circumference of the bale 98 within the baling chamber 54. It should be appreciated that the wrap material 66 is wrapped around the exterior circumference of the bale 98 at least one full revolution, but may include several revolutions resulting in multiple layers of the wrap material 66 around the bale 98. The baler controller 90 may identify completion of the wrap cycle in any suitable manner. For example, the baler implement 24 may include a sensor that monitors a length of the wrap material 66 dispensed, or may include an optical sensor that recognizes when the wrap material 66 has completed at least one full revolution, etc. The particular manner in which the baler controller 90 determines the completion of the wrap cycle is understood by those skilled in the art, is not pertinent to the teachings of this disclosure, and are therefore not described in greater detail herein.

When the baler controller 90 has determined that the wrap cycle is complete, the baler controller 90 may then control the weld actuator 84 to move the heating element 68 from the retracted position, such as shown in FIGS. 2 and 5, into the inserted position, such as shown in FIGS. 3 and 6. The baler controller 90 may generate a control signal to the weld actuator 84 causing the weld actuator 84 to move, for example, extend, thereby causing the moveable member 74 of the mount system 70 to move relative to the fixed member, and thereby causing the heating element 68 to move from the retracted position into the inserted position.

The baler implement 24 may control the weld actuator 84 to achieve a desired pressure of the heating element 68 against the wrap material 66. In one implementation, the baler implement 24 may include a pressure sensor coupled to the weld actuator 84, and operable to sense a pressure or force generated by the weld actuator 84. The pressure generated by the weld actuator 84 may be correlated to a force exerted by the heating element 68 against the wrap material 66. The baler controller 90 may monitor the pressure at the weld actuator 84, and control the weld actuator 84 accordingly to achieve the desired pressure between the heating element 68 and the wrap material 66.

The baler controller 90 may further engage the heating element 68 to increase a temperature of the heating element 68 to at least the wrap melting temperature. The baler controller 90 may control the heating element 68 to maintain the temperature of the heating element 68 at the wrap melting temperature for a pre-defined period of time. For example, the baler controller 90 may controller the heating element 68 and the wrap actuator to maintain the temperature of the heating element 68 for the pre-defined period of time while the heating element 68 is held at the desired pressure against the wrap material 66. The pre-defined period of time and the desired pressure may be related to the desired weld characteristics, and are dependent upon the particular characteristics of the wrap material 66.

After completion of the pre-defined period of time, the baler controller 90 may disengage the heating element 68, thereby allowing the heating element 68 to cool, and control the weld actuator 84 to move the heating element 68 from the inserted position into the retracted position, thereby preparing the baler implement 24 for the next bale formation cycle.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A baler implement (24) comprising:
a support structure (26);
a bale formation system (46) defining a baling chamber (54) configured to form crop material into a bale (98) having a cylindrical shape;
a wrap system (62) configured to contain a supply of a wrap material (66) and including a feed system (64) configured for inserting the wrap material (66) into the baling chamber (54) to wrap the bale (98) with the wrap material (66);
a heating element (68) moveable relative to the support structure (26) into the baling chamber (54), wherein the heating element (68) is moveable between an inserted position in which the heating element (68) is disposed within the baling chamber (54) for contacting the wrap material (66) in pressing engagement within the baling chamber (54) for welding layers of the wrap material (66) together, and a retracted position in which the heating element (68) is disposed outside of the baling chamber (54).

2. The baler implement (24) set forth in claim 1, wherein the bale formation system (46) includes an inlet (52) operable to introduce the crop material into the baling chamber (54), and wherein the heating element (68) is moveable through the inlet (52) of the bale formation system (46) into the baling chamber (54) when in the inserted position and out of the inlet (52) for allowing crop material to flow through the inlet (52) into the baling chamber (54) when in the retracted position.

3. The baler implement (24) set forth in claim 1, further comprising a mount system (70) moveably supporting the heating element (68) relative to the support structure (26).

4. The baler implement (24) set forth in claim 3, wherein the mount system (70) includes a stationary member (72) fixed in position relative to the support structure (26), and a moveable member (74) moveably supported by the stationary member (72) for movement relative to the stationary member (72).

5. The baler implement (24) set forth in claim 4, wherein the heating element (68) is attached to the moveable member (74).

6. The baler implement (24) set forth in claim 5, wherein the moveable member (74) includes a weld bar (86) extending substantially across a width of the baling chamber (54).

7. The baler implement (24) set forth in claim 6, wherein the heating element (68) is attached to the weld bar (86) and extends substantially across the width of the baling chamber (54).

8. The baler implement (24) set forth in claim 4, wherein the stationary member (72) defines a guide feature (76) and the moveable member (74) includes a guide follower (78) engaged with the guide feature (76), wherein the guide feature (76) positions the guide follower (78) through movement between the inserted position and the retracted position.

9. The baler implement (24) set forth in claim 8, wherein the guide feature (76) includes a slot (80) defined by the stationary member (72), and the guide follower (78) includes a roller device (82) disposed in rolling engagement within the slot (80).

10. The baler implement (24) set forth in claim 4, wherein the mount system (70) includes a weld actuator (84) coupled to the moveable member (74) for moving the moveable member (74) and the heating element (68) attached thereto between the inserted position and the retracted position.

11. The baler implement (24) set forth in claim 10, wherein the weld actuator (84) includes one of a hydraulic cylinder or an electric actuator.

12. The baler implement (24) set forth in claim 1, wherein the wrap material (66) defines a wrap melting temperature, and wherein the heating element (68) is configured for heating the wrap material (66) to the wrap melting temperature for welding layers of the wrap material (66) together.

13. The baler implement (24) set forth in claim 1, wherein the heating element (68) is one of an electrical resistance heater, a hot air heater, an infrared heater, a laser heater, or a hot fluid heater.

14. The baler implement (24) set forth in claim 1, further comprising a baler controller (90) including a processor (92) and a memory (94) having a wrap weld algorithm (96) stored thereon, wherein the processor (92) is operable to execute the wrap weld algorithm (96) to:
identify completion of a wrap cycle in which the wrap material (66) is wrapped around a circumference of the bale (98) within the baling chamber (54);
control a weld actuator (84) to move the heating element (68) from the retracted position into the inserted position;
engage the heating element (68) to increase a temperature of the heating element (68) to at least a wrap melting temperature for a period of time;
disengage the heating element (68) after the period of time; and
control the weld actuator (84) to move the heating element (68) from the inserted position into the retracted position after the period of time.

15. The baler implement (24) set forth in claim 14, wherein the processor (92) is operable to execute the wrap weld algorithm (96) to control the weld actuator (84) to achieve a desired pressure of the heating element (68) against the wrap material (66).
